Europäisches Patentamt

European Patent Office

Office européen des brevets

(19)

(11) Publication number: **0 174 095 B1**

# EUROPEAN PATENT SPECIFICATION

(12)

(45) Date of publication of patent specification: **29.05.91**  (51) Int. Cl.⁵: **G11B 5/596**

(21) Application number: **85305523.4**

(22) Date of filing: **02.08.85**

(54) Tracking control apparatus.

(30) Priority: **22.08.84 JP 174362/84**
**21.11.84 JP 246550/84**

(43) Date of publication of application:
**12.03.86 Bulletin 86/11**

(45) Publication of the grant of the patent:
**29.05.91 Bulletin 91/22**

(84) Designated Contracting States:
**AT CH DE FR GB IT LI NL SE**

(56) References cited:
**DE-A- 2 461 868**

(73) Proprietor: **SONY CORPORATION**
**7-35 Kitashinagawa 6-Chome Shinagawa-ku**
**Tokyo 141(JP)**

(72) Inventor: **Kutaragi, Ken Sony Corporation Patents Division**
**6-7-35 Kitashinagawa**
**Shinagawa-ku Tokyo 141(JP)**

(74) Representative: **Thomas, Christopher Hugo et al**
**D Young & Co 10 Staple Inn**
**London WC1V 7RD(GB)**

## Description

This invention relates to tracking control apparatus for recording and/or reproducing signals on and from a rotating disc.

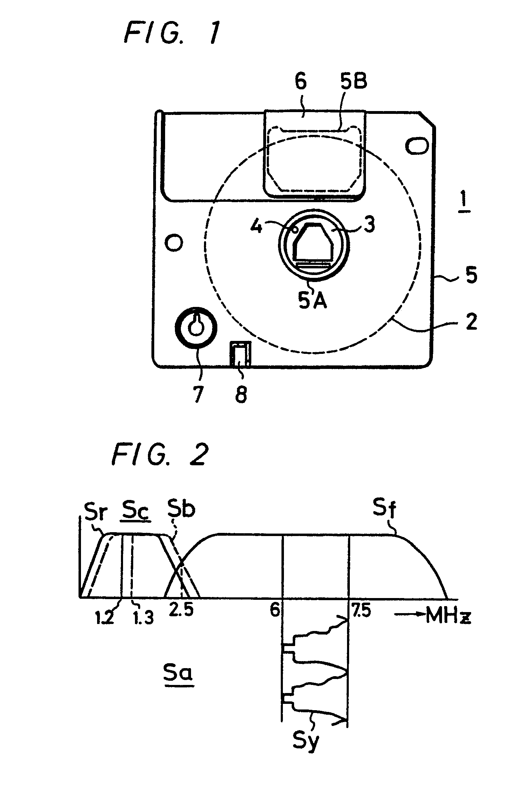

Figure 1 of the accompanying drawings shows a floppy disc 1 of small size for an electronic still camera, comprising a magnetic disc 2 47 mm in diameter and 40 $\mu$m in thickness, provided at its centre with a centre core 3 with which a spindle of a drive apparatus (not shown) can be engaged. The centre core 3 is also provided with a magnetic member 4 which indicates the rotational position of the disc 2 when the disc 2 is rotated.

A jacket 5 is 60 x 54 x 3.6 mm in size and rotatably contains the disc 2. The jacket 5 includes a central opening 5A in which the centre core 3 and the magnetic member 4 are exposed. The jacket 5 is further provided with another opening 5B through which a magnetic head (not shown) comes into contact with the disc 2 upon recording and/or reproducing. When the floppy disc 1 is not in use, the opening 5B is closed by a slidable dust-proof shutter 6. A counter dial 7 indicates the number of pictures recorded by an electronic still camera, and a tab member 8 prevents accidental or erroneous recording. If the tab member 8 is removed recording is inhibited.

Upon recording, 50 magnetic tracks can be concentrically formed on the disc 2. the outermost track being the first track and the innermost track being the 50th track. Each track width is 60 $\mu$m and the guard band width between the tracks is 40 $\mu$m.

In shooting a picture using the electronic still camera, the disc 2 is rotated at 3600 r.p.m. (the field frequency) and a colour video signal of one field is recorded on one track of the disc 2 in still mode. The colour video signal to be recorded has a frequency distribution as shown in Figure 2 of the accompanying drawings. A luminance signal Sy is frequency-modulated to form a frequency modulated signal Sf, wherein the sync tip level of the signal is 6 MHz and the white peak level is 7.5 MHz. As a chrominance signal, there is formed a line sequential colour signal Sc which consists of a frequency modulated signal Sr (centre frequency 1.2 MHz) of a red colour difference signal and a frequency modulatd signal Sb (centre frequency 1.3 MHz) of a blue colour difference signal. A signal Sa obtained by adding the frequency modulated colour signal Sc and the frequency modulated luminance signal Sy is recorded on the disc 2.

The floppy disc 1 shown in Figure 1 has a size and characteristic appropriate to form a recording medium for a video signal.

However, it has been proposed also to use such a floppy disc 1 as a medium for recording digital data.

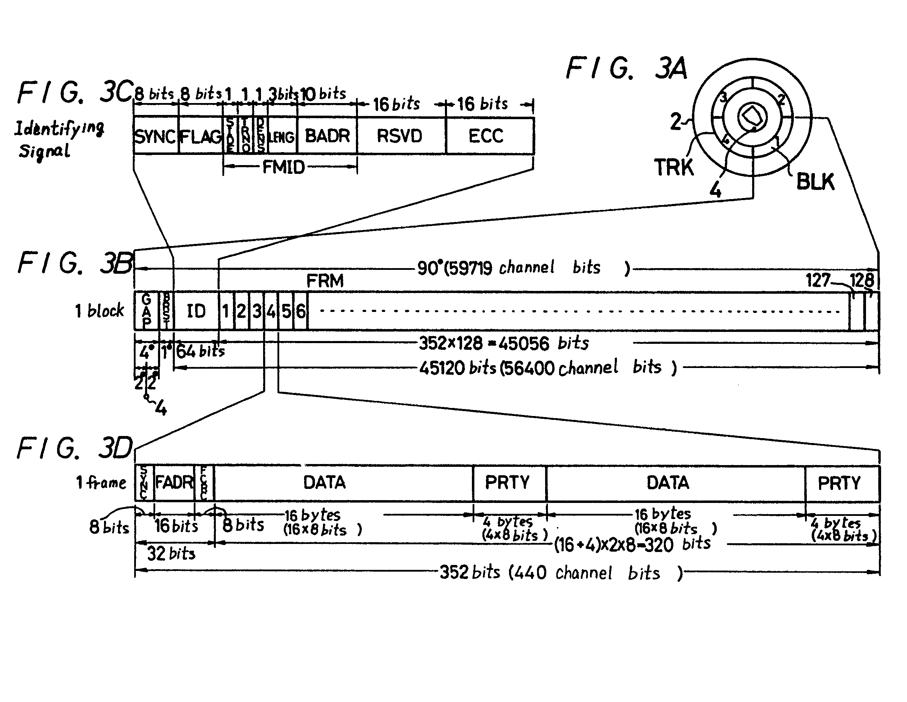

Figure 3 of the accompanying drawings shows a physical format for digital data when the floppy disc 1 is used.

A track TRK formed on the disc 2 in the case of digital data recording is equally divided into four sections of 90° in its circumferential direction, as shown in Figure 3A, taking the magnetic member 4 as a reference position. Each of the four divided sections is referred to as a block BLCK, and the block BLCK of the interval corresponding to the magnetic member 4 is represented as a first block 1 and the succeeding three blocks are represented as second, third and fourth blocks 2, 3 and 4, sequentially. When data are accessed from the floppy disc 1, the accessing is carried out at the unit of one block BLCK.

As shown in Figure 38, in each block BLCK, an interval of 4° from its beginning is represented as a gap interval GAP which affords a margin upon reading and writing. A succeeding interval of 1° is represented as a burst interval BRST. In this case, in the first block 1, the centre of the gap interval GAP corresponds to the position of the magnetic member 4. The burst interval BRST is an interval in which is recorded and/or reproduced a burst signal which contains:

i. preamble
ii. recording density
iii. flag for digital data.

The burst interval BRST is followed by an interval for an index or identifying signal ID. In this case, as shown in Figure 3C, the identifying signal ID consists of a synchronizing signal SYNC of 8 bits, a flag signal FLAG of 8 bits, a format identifying signal FMID of 16 bits, a reserved signal RSVD of 16 bits and an error correcting signal ECC of 16 bits. The flag signal FLAG is the signal which indicates the status, such as whether the track TRK, to which the block BLCK belongs, is a bad track or not, or whether it is already erased or not, etc. The format identifying signal FMID is the signal which indicates the logical format of the floppy disc 1 and which contains various identifying data. The error correcting signal ECC is the error correcting code for the afore-mentioned signals FLAG, FMID and RSVD and which is a simple parity code.

In each block BLCK an interval following the interval of the identifying signal ID is equally divided into 128 intervals, and a signal called a frame FRM is recorded on or reproduced from each of these 128 intervals.

2

That is, as shown in Figure 3D, one frame FRM includes sequentially from its beginning a frame synchronizing signal SYNC of 8 bits, a frame address signal FADR of 16 bits, a check signal FCRC of 8 bits, data DATA of 16 bytes (one byte = 8 bits), redundant or parity data PRTY of 4 bytes, other digital data DATA of 16 bytes and other redundant or parity data PRTY of 4 bytes. The check signal FCRC is a cyclic redundancy check code (CRCC) for the frame address signal FADR. The data DATA are the inherent data which should be accessed by a host computer and these data DATA are interleaved within a period of digital data of one block BLCK. The redundant data PRTY are parity data which are generated by a Reed Solomon coding method having a minimum distance of five for digital data of one block (32 bytes x 128 frames).

Accordingly, the capacities for digital data of one block BLCK, one track TRK and one floppy disc 1 are as follows:

one block: 4096 bytes ( = 16 bytes x 2 x 128 frames)
one track: 16 K bytes ( = 4096 bytes x 4 blocks)
one floppy disc (in the case of one side): 800 K bytes ( = 16 K bytes x 50 tracks)

When the digital data are accessed from the floppy disc 1, the accessing is carried out at the unit of one block BLCK, so that the digital data are accessed from the floppy disc 1 at the unit of 4 K bytes.

The numbers of bits in one frame FRM and one block BLCK are as follows:

one frame: 352 bits ( = 8 + 16 + 8 bits + (16 + 4 bytes) x 8 bits x 2 frames)
one block (only index interval and frame interval): 45120 bits ( = 352 bits x 128 frames)

In practice, however, when the digital signal is recorded on or reproduced from the floppy disc 1, a digital sum value (DSV) is required to be small and a max (maximum length between transitions)/ min (minimum length between transitions) T is required to be small, while a window margin Tw is required to be large. Thus, all of the afore-described digital signals are subjected to 8 to 10 (eight-to-ten) conversion with $T_{max}$ = 3.2 T and then recorded on the floppy disc 1. Upon reproducing, they are subjected to a reverse conversion and then subjected to the succeeding signal processing.

Accordingly, in the case of the above-described data density, the practical number of bits in the floppy disc 1 is multiplied by 10/8 and becomes:

one frame: 440 channel bits
one block (only the index signal interval and frame interval): 56400 channel bits

Thus, the number of bits in the whole interval of one block corresponds to 59719 channel bits (approximately 56400 channel bits x 90$^°$/85$^°$). Since, in practice, the length of each interval is assigned by the number of channel bits as mentioned above, the total angle of the frame intervals is a little shorter than 85$^°$.

Consequently, the bit rate at which the floppy disc 1 is accessed by the digital signal (after 8 to 10 conversion) is:

14.32 M bits/sec (approximately 59719 bits x 4 blocks x the field frequency) and one bit corresponds to 69.8 nanoseconds (approximately 1/14.32 M bits).

A video signal and the digital data may be recorded on one floppy diso 1 in a mixed state if they are recorded at the track unit.

As described above, with the format shown in Figure 3, digital data of 800 K bytes can be written on or read from the floppy disc 1 of 47 mm (2-inch) size per one side surface thereof, and this capacity is more than twice the capacity (320 K bytes) of the prior art 5.25-inch floppy disc. Thus, this 2-inch floppy disc 1 has a larger capacity in spite of its smaller size.

Since the disc 2 is rotated at the same rotational speed as in the case of recording and/or reproducing a video signal, the video signal and the digital data can be recorded on or reproduced from the disc 2 while mixed. In this case, both the signals to be recorded on or reproduced from the disc 2 become similar in frequency spectrum and so on, so that they can be recorded on or reproduced from the disc 2 under optimum conditions, such as with the optimum electromagnetic conversion characteristic and contact condition with a magnetic head. Moreover, even when the two signals are recorded on or reproduced from the disc 2 while mixed, since the rotational speed of the disc 2 is not changed, it is not necessary to provide extra time to change-over the servo circuit, and thus the two signals can selectively be used immediately. In addition, using the same rotational speed and the same mechanisms such as an electromagnetic transducer system, the cost is reduced.

Generally, in a tracking servo control operation for video tracks, a closed loop servo is used so that the quality of the picture is made excellent by establishing the just tracking state at the position at which the radio frequency (RF) output derived from the magnetic head becomes a maximum.

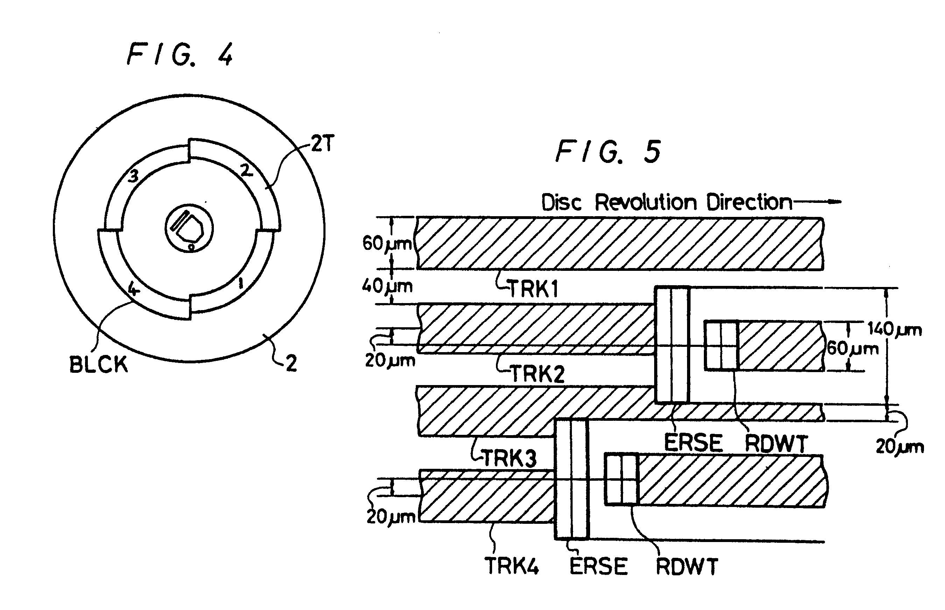

On the other hand, in the case of digital data recording, the digital data must be accessed at high speed, so that the position of the magnetic head relative to the track is determined by an open loop control

3

to a stepping motor which drives the magnetic head. In other words, the tracking position is determined by the mechanical precision. And, when the data are written on the disc 2, both sides of the data track are erased in order to achieve compatibility. Thus, the guard band of the predetermined width is always kept between adjacent tracks. However, in the case of the floppy disc 1 having the format described in connection with Figure 3, one track is divided into four blocks, and the writing and/or reading may be carried out at the unit of one block. Thus not all of one track of digital data on the disc 2 may be formed on the very same circle, but some may be displaced by the amount of the lack of head positioning precision in the radial direction of the disc 2. This amount is influenced by factors such as the temperature and humidity, and the result may be as shown in exaggerated form in Figure 4 of the accompanying drawings. Accordingly, upon reading, when the head traces the track at the position determined by the mechanical precision of the open loop so as to trace a circle, there occurs off-track positioning of at least some blocks. However, in the case of the digital data, unlike the analog video signal, it is sufficient that digital "0" and "1" are discriminated. So, if the data from the adjacent tracks are not mixed thereto, the digital data can be reproduced substantially correctly. Accordingly, if the guard band of a width larger than the predetermined width is always formed at both sides of each track by the wide erase, the data from the adjacent tracks can be prevented from being mixed in as a cross-talk component, and thus the playback of digital data is not disturbed.

However, in the case of a floppy disc 1 on which the video track and the digital data track are formed in a mixed state, if the above wide erase is carried out thereon, the following defects will occur.

That is, when the writing is carried out on the track of the digital data or the video track is re-written, if the video track is already recorded on the adjacent track thereof, a part of the video track is erroneously erased by the wide erase, so that the track width of that portion is reduced. If the track width is reduced as described above, the digital data is not much affected, but the analog video signal is affected considerably so that the S/N ratio thereof is substantially deteriorated, and the quality of the reproduced picture is deteriorated. As a result, in the case of a floppy disc 1 on which the digital data track and the video signal track are formed in a mixed state, it is necessary that upon recording (writing), the erasure is not carried out, while upon reproducing, the tracking control of the closed loop is carried out thereby to achieve precise tracking.

In this case, if the closed loop tracking control for the prior art floppy disc is to be employed, the tracking control becomes such that the tracking at a particular point of one track becomes a maximum, or the tracking is established on the basis of the average of the whole of one track. As a result, when the digital data is read out, in worst cases, the head extends to trace the adjacent track, so that the information of the adjacent track is mixed in as a cross-talk component, thus causing the error rate of the data to be deteriorated considerably.

When only digital data are recorded on one floppy disc 1 with one track divided into a plurality of blocks, and are then reproduced therefrom, if the number of tracks per disc 2 is increased so as to afford a high recording density, upon reproducing the data, tracking servo must be applied so as to prevent the head from tracing the adjacent tracks, otherwise the above-described defects will occur similarly.

Moreover, in the case of a floppy disc 1 on which the video signal and the digital data are recorded and/or reproduced in a mixed state, the following problems are left unsolved.

That is, as, for example, shown in Figure 5 of the accompanying drawings, let is be assumed that old tracks TRK1 to TRK4 are formed to have a correct pattern, and that an erase head ERSE carries out the erasure ahead of a read/write head (recording and reproducing head) RDWT, and that its track width (erase width) is 140 $\mu$m.

Furthermore, let it be assumed that when a new signal is recorded on the old track TRK2, the heads ERSE and RDWT are respectively displaced by 20 $\mu$m to the side of the track TRK3 and that when a new signal is recorded on the old track TRK4, the heads ERSE and RDWT are respectively displaced by 20 $\mu$m to the side of the track TRK3. If so, both sides of the track TRK3 are erased by the width of 20 $\mu$m each so that the track width thereof becomes 20 $\mu$m.

When the signal recorded on the track TRK3 is digital data, even if the track width is reduced to 20 $\mu$m, no severe problem will occur, because the recorded signal is a digital signal. However, when on the other hand the signal recorded on the track TRK3 is a video signal, this video signal represents an analog signal so that if the track width is reduced, the quality of a reproduced picture is deteriorated.

Therefore, consideration might be given to a closed loop tracking servo circuit in the drive mechanism of the heads ERSE and RDWT as employed in a video tape recorder (VTR). That is, when a new signal is recorded on the track TRK2 (and the track TRK4), if the tracking servo is applied to the heads for the old track TRK2 (and TRK4) thereby to determine the tracking positions of the heads ERSE and RDWT, and then the new signal is recorded on the track TRK2 (and TRK4), the track TRK2 (and TRK4) provided by the new signal is formed at the same position as that of the old track TRK2 (and TRK4).

Accordingly, since the track width of the track TRK3 can be prevented from being reduced, even if the video signal is recorded on the track TRK3, the quality of the reproduced picture can be prevented from being deteriorated.

However, if the positions of the heads ERSE and RDWT are determined by the tracking servo control of the closed loop, it takes some time for the heads ERSE and RDWT to stabilize their positions on the track so that the digital data cannot be recorded on the disc at high speed.

According to the present invention there is provided a tracking control apparatus for recording and/or reproducing signals of a rotating disc having a plurality of concentric recording tracks, the apparatus comprising:

transducer means provided for contacting relation with said disc;

motor means coupled to said transducer means for moving said transducer means in a radial direction of said disc and

level detecting means for detecting levels of reproduced signals from the tracks;

characterised by:

track status store means storing track identifying signals for each of said recording tracks; and

means for controlling said motor means for positioning said transducer means in tracking relation to each of said tracks when said identifying signals indicates that either of the adjacent tracks on both sides are not digital data tracks or said track is an analog data track based on the outputs from said level detecting means, otherwise said motor means being controlled regardless of outputs from said level detecting means.

The invention will now be described by way of example with reference to the accompanying drawings, throughout which like parts are referred to by like references, and in which:

Figure 1 is a plan view of a floppy disc;

Figure 2 is a waveform diagram showing the frequency distribution of video signals recorded on and/or reproduced from a magnetic disc of the floppy disc shown in Figure 1;

Figure 3A is a diagram showing an example of a digital data track of the magnetic disc;

Figures 3B to 3D are diagrams showing physical data formats recorded on the digital data track;

Figure 4 is a diagram showing an enlarged digital data track;

Figure 5 is a diagram for explaining the operation of heads on the tracks of the magnetic disc;

Figure 6 is a block diagram showing an embodiment of floppy disc drive system according to the present invention;

Figure 7 is a diagram for explaining the embodiment;

Figures 8A and 8B are diagrams for explaining a video signal and a digital data written on a magnetic disc in the embodiment;

Figure 9 is a diagram showing an example of a track identifying table formed on a random access memory of a microcomputer for accessing the magnetic disc;

Figure 10 is a diagram showing an example of how to control the position of the transducer on the track;

Figure 11 is a diagram showing the relation between an RF output and a just tracking state;

Figures 12A to 12D are waveform diagrams for explaining a tracking servo control operation of the embodiment;

Figure 13 is a flow chart showing an example of the tracking control operation of the embodiment; and

Figure 14 is a diagram showing an example of the signal identifying table formed in the random access memory of the microcomputer.

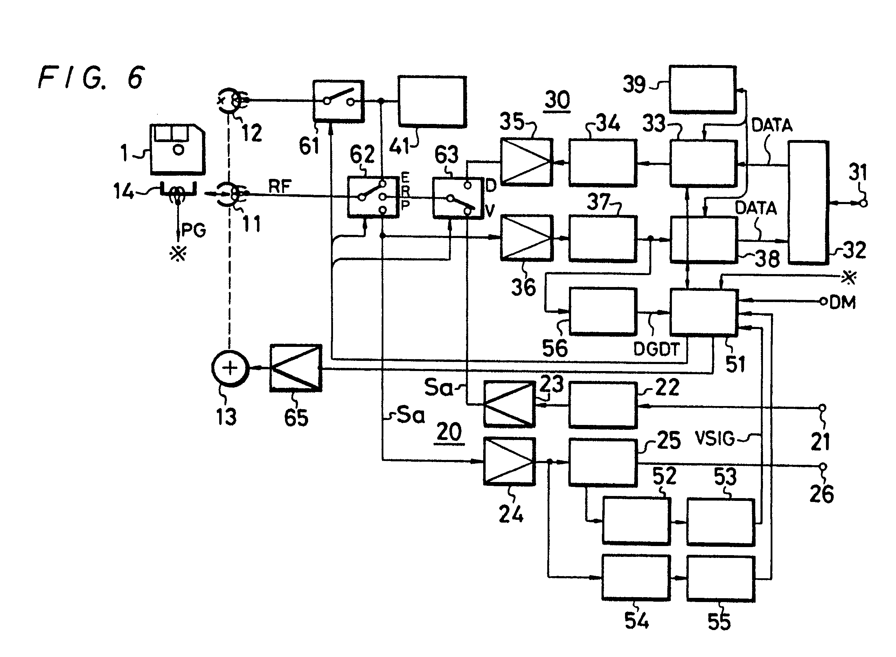

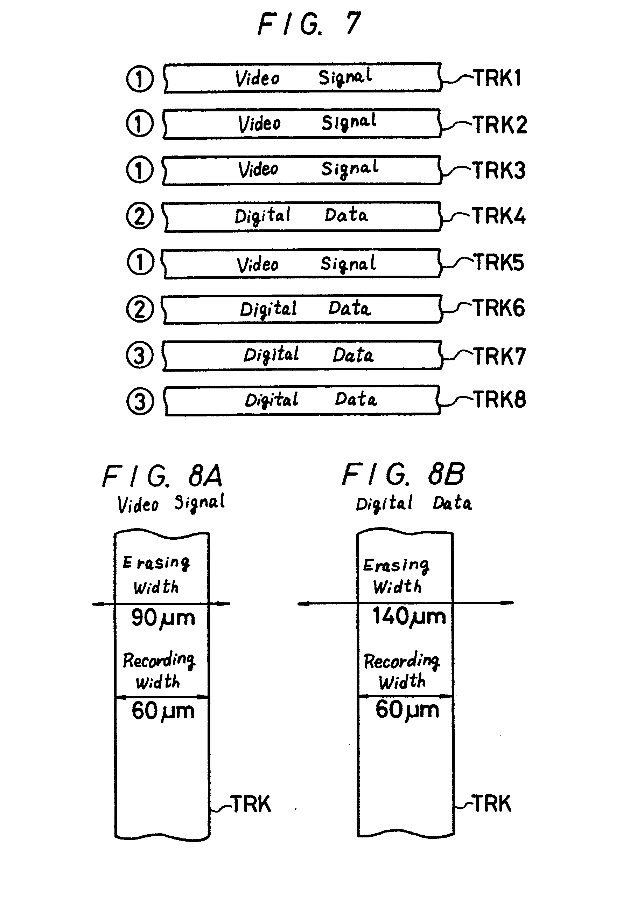

An embodiment of tracking control apparatus according to the present invention includes a floppy disc drive system as shown in Figure 6.

A read/write (recording and reproducing) head 11 and an erase head 12 are formed integrally such that the head 12 is ahead of the head 11, and the centres of their tracks coincide with each other. Also the track position thereof can be changed at the unit of, for example, 5 $\mu$m step by step by a stepping motor 13. The track width of the head 11 is 60 $\mu$m, while the track width of the head 12 is 140 $\mu$m.

The heads 11 and 12 are positioned in transducing relation with a magnetic disc 2 of a floppy disc 1 and the disc 2 is rotated at 60 revolutions per second by a spindle motor (not shown). Pulse generating means 14 is provided in association with the magnetic member 4 of the floppy disc 1, and produces a pulse which indicates the rotational position of the disc 2 at each rotation of the disc 2.

The embodiment also includes a recording and/or reproducing system 20 for a video signal and a recording and/or reproducing system 30 for digital data. An erase current source 41 produces an erase current and a microcomputer 51 is used as a system control for controlling the operation of the entire system.

The microcomputer 51 is supplied with the output pulse from the pulse generating means 14. Moreover, the microcomputer 51 is connected to a host computer (not shown) from which control signals (commands and parameters) for accessing the disc 1 are supplied.

Let is be assumed that the video signal and the digital data are respectively recorded on 8 tracks TRK1 to TRK8 as shown in Figure 7. This arrangement includes all possible combinations of the video signal tracks and the digital data tracks.

These possible combinations of tracks are classified into the following three cases ① to ③.

Case ① Tracks of video signal (the adjacent tracks are not limited) such as tracks TRK1, TRK2, TRK3 and TRK5.

Case ② Tracks of digital data (at least one of the adjacent tracks is a track of a video signal) such as tracks TRK4 and TRK6.

Case ③ Tracks of digital data (the adjacent tracks are all tracks of digital data) such as tracks TRK7 and TRK8.

When the track is erased and the signal is recorded and/or reproduced, in accordance with the cases ① to ③, the control operations written in the following tables 1 to 5 are required:

TABLE 1

| Case No. | Head used in erase operation |
|----------|------------------------------|
| ① | read/write head |
| ② | read/write head |
| ③ | wide erase head positioned ahead of read/write head |

TABLE 2

| Case No. | Erase method |
|----------|--------------|
| ① | Head position is determined by a closed loop. (see Figure 8A). |
| ② | Similar to the case ① , where only an specified block BLCK is erased. |
| ③ | Head position is determined by an open loop. A specified block BLCK is erased simultaneously (see Figure 8B). |

TABLE 3

| Case No. | Erase time |
|---|---|
| ① | ≃ 100 milliseconds |
| ② | ≃ 100 milliseconds |
| ③ | one field period (simultaneous to the recording) |

TABLE 4

| Case No. | The positioning of head upon recording |
|---|---|
| ① | Head position is determined by the closed loop. Signal is recorded at the position determined by the positions of old track and adjacent track. |
| ② | Similar to the case ① , where the position is carried out on only a specified block BLCK. |
| ③ | Open loop. The position is determined mainly by the mechanism. |

TABLE 5

| Case No. | The positioning of head upon reproducing |
|---|---|
| ① | Tracking servo by the closed loop is applied to thereby make the output from the head maximum. |
| ② | Similar to the case ① , where the positioning is carried out on only a specified block BLCK. |
| ③ | Open loop. The position is determined mainly by the mechanism. |

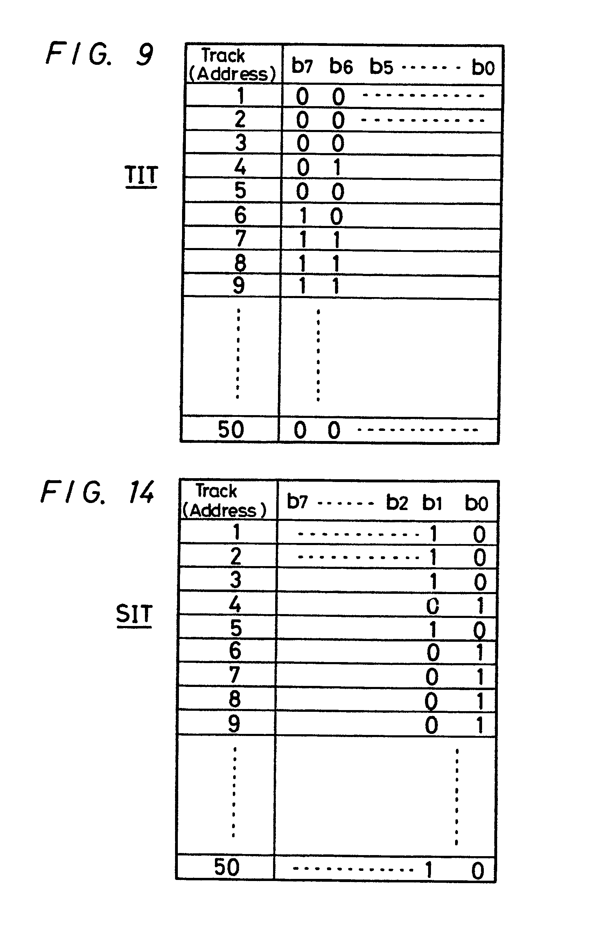

Moreover, when the disc 1 is set in a recordable state or booted, a track identifying table TIT indicating that the trck TRK belongs to one of the cases ① to ③ is formed in a memory as shown in Figure 9, and the above-described processing is carried out with reference to this table TIT. When the kinds of signal recorded on the track TRK are changed, the table TIT is also updated. Furthermore, the signal recorded on each track is accessed with reference to the table TIT, and the accessing operation is carried out on the

7

basis of the reference results as follows.

I. Playback in the case of ①

When the control signal is supplied to the microcomputer 51 from the host computer (not shown), a switching circuit 61 is turned off by the output from the microcomputer 51, and a switching circuit 62 is changed in position to a reproducing side contact P.

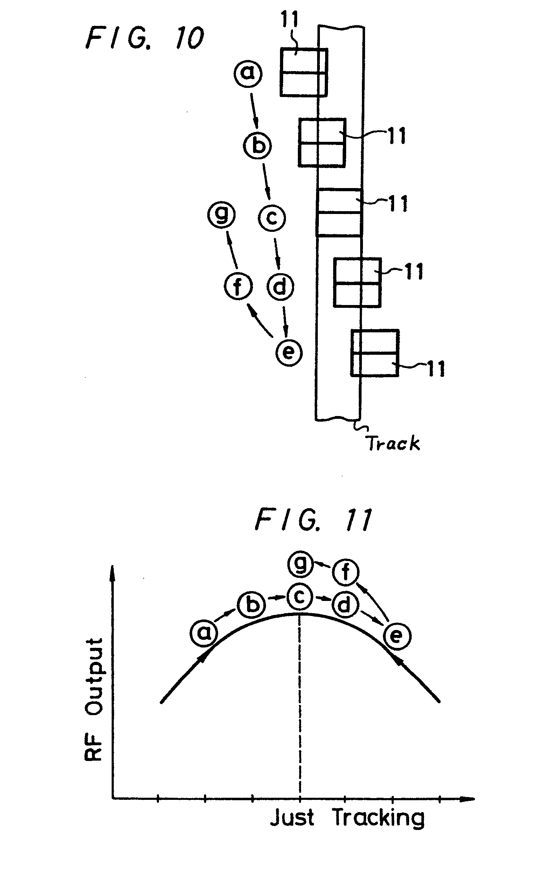

From the microcomputer 51, the drive signal (drive pulse and direction signal) is supplied to the stepping motor 13 whereby the heads 11 and 12 are moved towards the specified track TRK, the track position thereof is determined by the servo control of the closed loop. In other words, when the head 11 approaches near the desired or specified track TRK, the position of the head 11 is sequentially controlled as shown by marks ⓐ to ⓖ in Figure 10.

When the head 11 is moved as shown by the marks ⓐ to ⓔ, the reproducing level thereof is changed as shown by marks ⓐ to ⓔ in Figure 11 and becomes a maximum at the position of the mark ⓒ.

During this operation, the reproduced signal (video signal Sa) from the head 11 is supplied through the reproducing side contact P of the switching circuit 62 and a playback amplifier 24 to an envelope detecting circuit 54 which produces a signal indicative of the reproducing level of the head 11. This signal is converted to a digital signal by an analog-to-digital (A/D) converter 55, and then fed to the microcomputer 51. In the microcomputer 51, the change of the reproducing level relative to the head positions ⓐ to ⓔ is checked on the basis of the signal from the A/D converter 55. Since the reproducing level becomes a maximum when the head position is at ⓒ, the head position is changed as ⓔ to ⓕ to ⓖ in Figure 10 and the head 11 is fixed at the position shown by ⓖ; namely, the just tracking position.

Thus the head 11 is fixed at the position of the specified track TRK by the servo control of the closed loop.

At this time, the reproduced signal of the head 11 from the playback amplifier 24 is supplied to a reproducing circuit 25, in which it is converted to the original video signal of the NTSC system and this video signal is supplied to each section by way of a terminal 26.

II. Playback (reading) in the case of ②

The position of the head 11 is determined similarly to the case of I. In this case, however, since the digital data are recorded in the unit of block BLCK, the recorded patterns (blocks BLCK) are frequently not formed in the very same circle of the same track TRK as shown in Figure 4.

Accordingly, when the position of the head 11 is determined by the servo control of the closed loop, the reproducing level of only the specified block BLCK is detected thereby to determine the position of the head 11.

The tracking operation for the digital data track will be carried out as follows.

For instance, in a certain digital data track formed on the disc 2, when the microcomputer 51 is supplied with a command DM which commands the reading of the data of the second block, the tracking servo by which the portion of the second block becomes optimum is effected as follows.

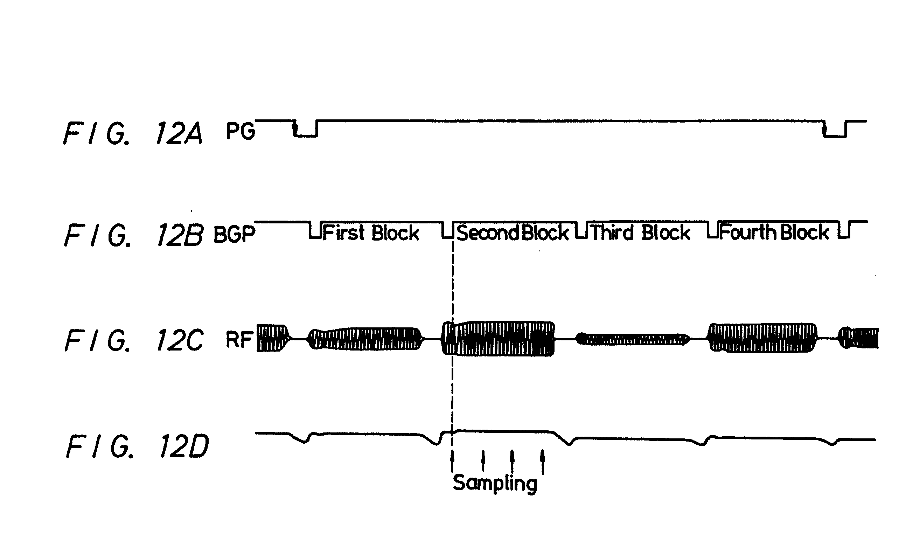

That is, the pulse generator 14 in Figure 6 produces one pulse PG (Figure 12A) per revolution of the disc 2. Since the digital data track is formed such that the position of the magnetic piece member 4 coincides with the portion of the gap portion GAP of the first block of each track, the position of the beginning of the first block of each track can be learned from the pulse PG. This pulse PG is supplied to the microcomputer 51. The microcomputer 51 can detect one of blocks traced by the head 11.

The RF output from the amplifier 24 is supplied to and detected by the envelope detecting circuit 54, the envelope-detected output from the envelope detecting circuit 54 is converted to the digital signal by the A/D converter 55 and then fed to the microcomputer 51. In the microcomputer 51, only the desired envelope-detected output of the RF output from the second block is sampled, and hence the tracking servo is effected so that the envelope-detected output of the RF output of the second block becomes a maximum.

The motor drive pulse from the microcomputer 51 is supplied through a motor drive circuit 65 to the stepping motor 13 which drives the head 11 to move in the radial direction of the disc 2. In this case, the head 11 is moved by one track by n pulses supplied to the stepping motor 13, when n is a positive integer. Accordingly, one pulse allows the head 11 to move by a very small distance such as 5 $\mu$m in the radial direction. Of course, the moving direction of the head 11 is determined by the drive signal from the microcomputer 51. Thus, the head is moved by 5 $\mu$m in the radial direction of the disc 2 by supplying each

EP 0 174 095 B1

pulse to the stepping motor 13.

According to the microcomputer 51, the position of the head in the radial direction of the disc 2, or the tracking position is changed gradually, and the tracking position at which the envelope-detected output of the RF output of the second block becomes a maximum is detected, in which the servo is to be effected such that the just tracking state is established at that position at all times.

The tracking servo in this case is the same as the tracking servo used in the case of reproducing the video signal.

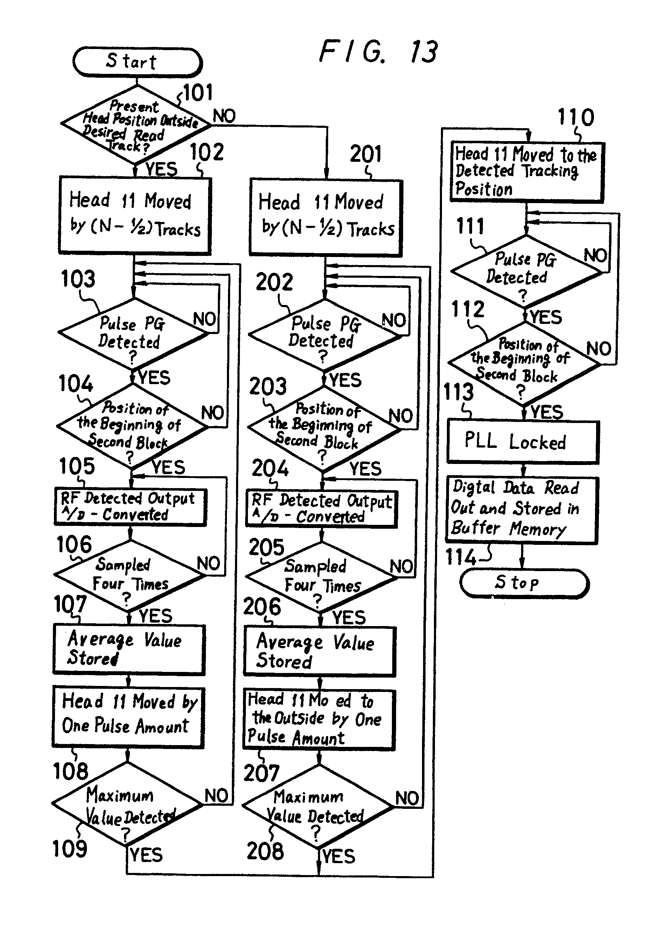

An example of the flow chart for this tracking control is shown in Figure 13.

At step 101, it is judged whether the present head position is outside the desired read track or not. If it is outside the desired read track and displaced by N tracks, the head 11 is driven to move by (N-1/2) tracks by the stepping motor 13 and brought to the position of the end portion of the outer side of the desired track (at step 102). If one the other hand the present head position is inside the desired read track, the head 11 is driven to move by (N-1/2) tracks by the stepping motor 13 and brought to the position of the inside end portion of the desired track (at step 201).

The reason for the above-described head moving will be described. When the head 11 is driven to move by N tracks by the stepping motor 13, due to the displacement of the mechanical accuracy, it becomes unclear which direction the head 11 is displaced from the just tracking position of the desired track. Therefore, the head 11 must be displaced in the particular direction from the just tracking position intentionally and also the amount of movement of the head 11 must be reduced as much as possible.

After steps 102 and 201, the programs are advanced to steps 103 to 109 and steps 202 to 208 in which the tracking position at which the envelope-detected output of the RF output of the second block becomes a maximum is searched.

More specifically, whether the pulse PG (Figure 12A) is detected at the tracking position or not is checked (at steps 103 and 202). If the pulse PG is detected, the position of the beginning of the second block is detected by counting a burst gate pulse BGP (Figure 12B) from the position of the pulse PG (at steps 104 and 203). If the position of the beginning of the second block is detected, the RF envelope-detected output (Figure 12C) of the second block is analog-to-digital converted (at steps 105 and 204). Then, the resultant digital envelope-detected signal is sampled four times (Figure 12D) per data of one block (at steps 106 and 205). The average value of the four sampled values is calculated and then stored (at steps 107 and 206). The reason why the digital signal is sampled four times and the average value thereof is calculated from the four sampled values is as follows.

Since due to the eccentricity of the centre spindle aperture of the disc 2, the envelope of the RF output from the head 11 is wavering. This wavering appears at two cycles per rotation of the disc 2 at maximum and normally at one cycle. Accordingly, one block which is 1/4 the one track is included in the semi-cycle of the wavering. In consequence, if the data is sampled four times and the average value is calculated from the four sampled values, it becomes possible to obtain a predetermined tracking evaluated value.

After the average value has been stored, the head 11 is moved to the tracking position which is distant from the preceding position by one pulse amount (at steps 108 and 207). In this case, at step 108, the head 11 is moved in the inward radial direction of the disc 2, while at step 207, the head 11 is moved in the outward radial direction of the disc 2.

Subsequently, it is judged whether the maximum value is detected from the stored average value or not (at steps 109 and 208). Steps 103 to 109 or steps 202 to 208 are repeated until the maximum value is detected.

When the tracking position is detected, in which the maximum value is calculated from the average value of the sampled values of the RF envelope-detected output at each tracking position by moving the head 11 a plurality of times, the head 11 is moved to the detected tracking position (at step 110). When the position of the beginning of the second block is detected from the pulse PG and the pulse BGP at steps 111 and 112, a phase locked loop (PLL) for forming a data extracting clock is locked by the burst signal BRST (at step 113) and the digital data is read out and then stored in a buffer memory (at step 114).

In the afore-mentioned example, the distance the head 11 moves from the current position to the specified or desired track position is reduced as much as possible. For this reason, the head moving direction by the servo control is reversed at steps 108 and 207. However, when the current head position lies at the inside of the desired track, if the head 11 is driven to move by (N + 1/2) track amounts at step 201, the head 11 is brought to the position of the end portion at the outer side of the desired track so that at step 207, the servo control can be carried out by driving the head 11 to move in the same direction as that of step 108. On the contrary, if the head 11 is driven to move by (N + 1/2) tracks at step 102, the servo control can be carried out similarly by driving the head 11 to move in the same direction at steps 108 and 207. In that case, the direction of moving the head 11 becomes reverse to the afore-described case.

9

In this way, when the tracking is effected with the maximum envelope-detected output of the RF output from the second block, the RF output of the head 11 becomes as shown in Figure 12C.

As described above, when the position of the head 11 is determined by the servo control of the closed loop, the reproducing level of only the desired block BLCK is detected thereby to determine the head position.

When the position of the head 11 is determined, the reproduced signal (digital data) from the head 11 is supplied through the contact P of the switching circuit 62 and a playback amplifier 36 to a demodulating circuit 37 in which it is converted from 10 to 8 bit digital data. The conversed signal is supplied to a decoder 38 and the signal of the desired block BLCK is written in a buffer memory 39 with a capacity of one block. The signal from the memory 39 is de-interleaved by the decoder 38 and corrected therein for error by the use of the redundant code PRTY so as to become correct digital data DATA. These correct digital data DATA are developed at a terminal 31 through an interface 32 and then fed to the host computer (not shown).

### III. Playback (reading) in the case of ③

From the microcomputer 51, the drive signal is supplied to the stepping motor 13 so that the head 11 is moved to the specified track TRK by the control of the open loop and then the head position is fixed at the point.

Thereafter, the specified data DATA are played back similarly to the case of II.

### IV. Erasing and recording in the case of ①

The position of the head 11 is determined similarly to the case of I. In this case, however, the old track TRK is the target position for the servo.

By the output from the microcomputer 51, the switching circuit 62 is changed in position to the erase side contact E so that the erase current from the erase current source 41 is supplied to the head 11, and the drive signal is supplied from the microcomputer 51 to the stepping motor 13, whereby the position of the head 11 is changed stepwise at, for example, every rotation of the disc 2. Thus as shown in Figure 8A, the right and left portions are excessively erased around the position which is determined initially.

When the erasing has ended, the head 11 is returned to the position which is determined initially. Then, the switching circuit 62 is changed in position to the recording side contact R by the output from the microcomputer 51, and the switching circuit 63 is changed in position to the video signal side contact V. An externally supplied colour video signal is supplied through a terminal 21 to a recording circuit 22, in which it is converted to the video signal Sa. One field of the signal Sa is supplied through a recording amplifier 23 and the switching circuits 63 and 62 to the head 11 which records it as a track TRK on the disc 2.

### V. Erasing and recording (writing) in the case of ②

The position of the head 11 is determined similarly to the case of IV. In this case, however, only the head 11 is servo-controlled for only the specified block BLCK similarly to the case of II.

When the position of the head 11 is determined, the specified block BLCK is erased by the head 11 similarly to the case of IV.

When the erasing has ended, the head 11 is returned to the position which is determined initially. Then, the switching circuit 62 is changed in position to the contact R by the output from the microcomputer 51, and the switching circuit 63 is changed in position to the digital data side contact D.

Then, the digital data from the host computer (not shown) are supplied through the terminal 31 and the interface 32 to the encoder 33 for writing in the memory 39. Also, the redundant data PRTY is added to these digital data and interleaved in the encoder 33. The data from the memory 39 are sequentially supplied to a modulating circuit 34 in which it is converted from 8 to 10 bit digital data. The converted data are supplied through a recording amplifier 35 and the switching circuits 63 and 62 to the head 11 and thereby recorded in the corresponding block BLCK.

### VI. Erasing and recording (writing) in the case off ③

The position of the head 11 is determined similarly to the case of III.

When the position of the head 11 is determined, the switching circuit 61 is switched on by the output from the microcomputer 51 and the switching circuits 62 and 63 are changed in position to the contacts R and D, respectively. In this way, the erase current from the erase current source 41 is supplied to the head 12 whereby the desired block BLCK is erased first with a wider width, and the digital data are recorded on the block BLCK.

The signal is accessed on the floppy disc 1 in accordance with the cases I to VI as mentioned above.

The operations in the cases of I to VI are carried out with reference to the table TIT and on the basis of the reference results. In this case, such table TIT is formed as follows.

When the floppy disc 1 is booted or re-booted, the switching circuit 62 is changed in position to the contact P by the output from the microcomputer 51, and the drive signal is supplied to the stepping motor 13 from the microcomputer 51, so that the tracks from the first to 50th tracks are sequentially searched at every track TRK by the head 11. Accordingly, at this time, the head 11 produces the reproduced signal of the tracks TRK and this reproduced signal is supplied through the switching circuit 62 to the amplifiers 24 and 36.

When the reproduced signal of the head 11 is the video signal Sa, the reproducing circuit 25 produces the luminance signal Sy. The luminance signal Sy is supplied to a synchronizing signal separating circuit 52 from which the horizontal synchronizing pulse is derived. The presence or absence of the horizontal synchronizing pulse is detected by a detecting circuit 53 and the detected output VSIG is supplied to the microcomputer 51.

When the reproduced signal of the head 11 are the digital data, the demodulating circuit 37 produces the digital signal which is converted from 10 to 8 bit digital data. This data signal is supplied to a burst detecting circuit 56 which then detects the presence or absence of the burst signal BRST, and detected output DGDT is supplied to the microcomputer 51.

The microcomputer 51 forms a signal identifying table SIT as, for example, shown in Figure 14 in accordance with these detected outputs VSIG and DGDT. That is, the table SIT is formed in the random access memory (RAM) of the microcomputer 51, and the addresses 1 to 50 of the RAM correspond to the first to 50th tracks. The address in this case is formed with reference to a certain predetermined absolute address SADR and is a relative address for this address SADR. Thus, the first address corresponding to, for example, the first track is the (SADR + 1) address of the absolute address.

In each address, the bit b1 and the bit b0 of the data indicate the kinds of the reproduced signals and are changed in accordance with the detected outputs VSIG and DGDT as follows:

| bit<br>detected<br>outputs | $b_1$ | $b_0$ | (reproduced signal) |
|---|---|---|---|
| VSIG exists | 1 | 0 | in the case of video signal |
| DGDT exists | 0 | 1 | in the case of digital data |
| neither of<br>VSIG and DGDT exists | 0 | 0 | no signal exists |

The remaining bits b7 to b2 are all made, for example "0".

When this table SIT is formed, on the basis of the table SIT, the track specifying table TIT is formed in the RAM of the microcomputer 51.

On this table TIT, the addresses 1 to 50 of the addresses (relative addresses) of the RAM correspond to the 1st to 50th tracks, respectively. In each address, the seventh bit b7 and the sixth bit b6 of the data indicate the cases 1 to 3 of the corresponding track TRK. For instance, they are indicated on the table

11

below.

| kinds of track TRK | bits | b$_7$ | b$_6$ |
|---|---|---|---|
| case ① | | 0 | 0 |
| case ② | | 0 | 1 |
| case ③ | | 1 | 0 |
| no signal exists | | 1 | 1 |

The remaining fifth bits b5 to zero-th bit b0 of each data are used to indicate status information of each track and so on.

When the signal of the floppy disc 1 is accessed, the table TIT is used as a reference and on the basis of reference results, the signal of the floppy disc 1 is accessed by one of the methods I to VI.

When the signal is recorded on the floppy disc 1 with the result that the signal recorded on the track TRK is changed from the video signal to the digital data or vice versa, the corresponding data on the tables SIT and TIT are updated.

As described above, since the control method for the head position, and the method for accessing the signal are changed over to the optimum methods shown in the Tables 1 to 5 in accordance with the kinds of signals on the desired track TRK and the adjacent track TRK, it is possible to improve the throughput of the whole system. For example, at least the digital data can be accessed at high speed like the prior art floppy disc, and a picture of good quality and high definition can be reproduced from the video signal.

In the above embodiment, the tables TIT and SIT can be modified into other formats. For instance, the tables TIT and SIT can be formed integrally.

Further, the table SIT (or TIT) is formed as a part of a directory on the floppy disc 1 and upon booting the floppy disc 1, the table TIT can be formed by reading this directory.

## Claims

1. A tracking control apparatus for recording and/or reproducing signals of a rotating disc (2) having a plurality of concentric recording tracks, the apparatus comprising:
   transducer means (11, 12) provided for contacting relation with said disc (2);
   motor means (13) coupled to said transducer means (11, 12) for moving said transducer means (11, 12) in a radial direction of said disc (2); and
   level detecting means (54) for detecting levels of reproduced signals from the tracks;
   characterised by:
   track status store means (51) storing track identifying signals for each of said recording tracks; and
   means (51, 65) for controlling said motor means (13) for positioning said transducer means (11, 12) in tracking relation to each of said tracks when said identifying signals indicate that either of the adjacent tracks on both sides are not digital data tracks or said track is an analog data track based on the outputs from said level detecting means (54), otherwise said motor means (13) being controlled regardless of outputs from said level detecting means (54).

2. Apparatus according to claim 1 wherein each of said digital data tracks is divided into a plurality of

EP 0 174 095 B1

sections, and when said identifying signals indicate that the adjacent tracks on both sides are not digital data tracks, said control means (51, 65) is operated based on the outputs from said level detecting means corresponding to each section of digital data track to be recorded or reproduced.

3. Apparatus according to claim 2 wherein said transducer means (11, 12) has an erase head (12) ahead of a recording and reproducing head (11), and when said identifying signals indicate that the adjacent tracks on both sides are digital data tracks, said erase head (12) is actuated upon recording digital data on the track.

4. Apparatus according to claim 3 wherein said erase head (12) has a gap wider than that of said recording and reproducing head (11).

**Revendications**

1. Un dispositif de commande de suivi de piste pour l'enregistrement et/ou la reproduction de signaux d'un disque tournant (2) comportant un ensemble de pistes d'enregistrement concentriques, ce dispositif comprenant :
   des moyens à transducteurs (11, 12) disposés de façon à être en contact avec le disque (2);
   des moyens à moteur (30) qui sont en couplage avec les moyens à transducteurs (11, 12) pour déplacer les moyens à transducteurs (11, 12) dans une direction radiale du disque (2); et
   des moyens de détection de niveau (54) pour détecter des niveaux de signaux reproduits à partir des pistes;
   caractérisé par :
   des moyens de mémorisation d'état de pistes (51) pour mémoriser des signaux d'identification de pistes pour chacune des pistes d'enregistrement; et
   des moyens (51, 65) pour commander les moyens à moteur (13) de façon à positionner les moyens à transducteurs (11, 12) dans une relation de suivi de piste par rapport à chacune des pistes, lorsque les signaux d'identification indiquent que l'une ou l'autre des pistes adjacentes situées des deux côtés de la piste considérée ne sont pas des pistes de données numériques,ou que la piste considérée est une piste de données analogiques, sur la base des signaux de sortie des moyens de détection de niveau (54), tandis que dans le cas contraire les moyens à moteur (13) sont commandés indépendamment des signaux de sortie des moyens de détection de niveau (54).

2. Dispositif selon la revendication 1, dans lequel chacune des pistes de données numériques est divisée en un ensemble de sections, et lorsque les signaux d'identification indiquent que les pistes adjacentes situées des deux côtés de la piste considérée ne sont pas des pistes de données numériques, les moyens de commande (51, 65) fonctionnent sur la base des signaux de sortie des moyens de détection de niveau correspondant à chaque section de piste de données numériques à enregistrer ou à reproduire.

3. Dispositif selon la revendication 2, dans lequel les moyens à transducteurs (11, 12) comportent une tête d'effacement (12) située en avant d'une tête d'enregistrement et de reproduction (11), et lorsque les signaux d'identification indiquent que les pistes adjacentes situées des deux côtés de la piste considérée sont des pistes de données numériques, la tête d'effacement (12) est actionnée au moment de l'enregistrement de données numériques sur la piste.

4. Dispositif selon la revendication 3, dans lequel la tête d'effacement (12) a un entrefer plus large que celui de la tête d'enregistrement et de reproduction (11).

**Ansprüche**

1. Vorrichtung zur Spurnachlaufsteuerung zum Aufzeichnen und/oder Wiedergeben von Signalen einer sich drehenden Platte (2), die eine Vielzahl von konzentrischen Aufzeichnungsspuren hat, welche Vorrichtung umfaßt:
   Wandler (11, 12), die zum Herstellen einer berührenden Beziehung mit der Platte (2) vorgesehen sind, einen Motor (13), der mit den Wandlern (11, 12) zum Bewegen der Wandler (11, 12) in einer radialen

13

Richtung der Platte (2) verbunden ist, und

ein Pegelerfassungsmittel (54) zum Erfassen von Pegeln von aus den Spuren wiedergegebenen Signalen,

**gekennzeichnet** durch

ein Spur-Zustandsspeichermittel (51), das Spur-Identifizierungssignale für jede der Aufzeichnungsspuren speichert, und

Mittel (51, 65) zum Steuern des Motors (13) zum Zwecke des Positionierens der Wandler (11, 12) in Spurnachlaufbeziehung zu jeder der Spuren, wenn die Identifizierungssignale auf der Grundlage der Ausgangssignale aus dem Pegelerfassungsmittel (54) anzeigen, daß eine der beiden angrenzenden Spuren auf beiden Seiten keine Digitaldatenspur ist oder die Spur eine Analogdatenspur ist, wobei andererseits der Motor (13) ohne Rücksicht auf Ausgangssignale aus dem Pegelerfassungsmittel (54) gesteuert wird.

2. Vorrichtung nach Anspruch 1, bei der jede der Digitaldatenspuren in eine Vielzahl von Abschnitten unterteilt ist und bei der, wenn die Identifizierungssignale anzeigen, daß die angrenzenden Spuren auf beiden Seiten keine Digitaldatenspuren sind, die Mittel (51, 65) zum Steuern auf der Grundlage der Ausgangssignale aus dem Pegelerfassungsmittelentsprechend jedem Abschnitt der Digitaldatenspur, in der aufgezeichnet oder aus der wiedergegeben werden soll, betätigt werden.

3. Vorrichtung nach Anspruch 2, bei der die Wandler (11, 12) einen Löschkopf (12) vor einem Aufzeichnungs- und Wiedergabekopf (11) enthalten und bei der, wenn die Identifizierungssignale anzeigen, daß die angrenzenden Spuren auf beiden Seiten Digitaldatenspuren sind, der Löschkopf (12) auf das Aufzeichnen von Digitaldaten in der Spur hin betätigt wird.

4. Vorrichtung nach Anspruch 3, bei der der Löschkopf (12) einen Spalt hat, der breiter als derjenige des Aufzeichnungs-und Wiedergabekopfes (11) ist.

EP 0 174 095 B1

*FIG. 1*

*FIG. 2*

FIG. 3A

FIG. 3C

Identifying Signal

| SYNC | FLAG | STRIDE | STATUS | P | LENG | BADR | RSVD | ECC |

8 bits | 8 bits | 1 | 1 | 1 | 3 bits | 10 bits | 16 bits | 16 bits

FMID

FIG. 3B

90° (59719 channel bits)

FRM

1 block

| GAP | POST | ID | 1 | 2 | 3 | 4 | 5 | 6 | - - - - - - | 127 | 128 |

4° 1° 64 bits

352×128 = 45056 bits

45120 bits (56400 channel bits)

FIG. 3D

1 frame

| SYN | FADR | ECC | DATA | PRTY | DATA | PRTY |

8 bits | 16 bits | 8 bits | 16 bytes (16×8 bits) | 4 bytes (4×8 bits) | 16 bytes (16×8 bits) | 4 bytes (4×8 bits)

32 bits

(16+4)×2×8 = 320 bits

352 bits (440 channel bits)

EP 0 174 095 B1

## FIG. 4

## FIG. 5

Disc Revolution Direction →

60μm

40μm TRK1

20μm TRK2

ERSE RDWT 140μm

60μm

20μm

TRK3 ERSE RDWT

20μm

TRK4 ERSE RDWT

BLCK 2T 2

EP 0 174 095 B1

FIG. 6

EP 0 174 095 B1

# F I G. 7

| | | |
|---|---|---|
| ① | Video    Signal | ~TRK1 |
| ① | Video    Signal | ~TRK2 |
| ① | Video    Signal | ~TRK3 |
| ② | Digital    Data | ~TRK4 |
| ① | Video    Signal | ~TRK5 |
| ② | Digital    Data | ~TRK6 |
| ③ | Digital    Data | ~TRK7 |
| ③ | Digital    Data | ~TRK8 |

## F I G. 8A
### Video Signal

Erasing Width

90 μm

Recording Width

60 μm

~TRK

## F I G. 8B
### Digital Data

Erasing Width

140 μm

Recording Width

60 μm

~TRK

*F I G. 9*

TIT

| Track (Address) | b7 | b6 | b5 ...... b0 |
|---|---|---|---|
| 1 | 0 | 0 | ------------- |
| 2 | 0 | 0 | ------------- |
| 3 | 0 | 0 | |
| 4 | 0 | 1 | |
| 5 | 0 | 0 | |
| 6 | 1 | 0 | |
| 7 | 1 | 1 | |
| 8 | 1 | 1 | |
| 9 | 1 | 1 | |
| ⋮ | ⋮ | | |
| 50 | 0 | 0 | ------------- |

*F I G. 14*

SIT

| Track (Address) | b7 ...... b2 | b1 | b0 |
|---|---|---|---|
| 1 | ------------- | 1 | 0 |
| 2 | ------------- | 1 | 0 |
| 3 | | 1 | 0 |
| 4 | | 0 | 1 |
| 5 | | 1 | 0 |
| 6 | | 0 | 1 |
| 7 | | 0 | 1 |
| 8 | | 0 | 1 |
| 9 | | 0 | 1 |
| ⋮ | | ⋮ | |
| 50 | ------------- | 1 | 0 |

FIG. 10

Track

FIG. 11

RF Output

Just Tracking

FIG. 12A PG

FIG. 12B BGP ⨆First Block ⨆Second Block ⨆Third Block ⨆Fourth Block ⨆

FIG. 12C RF

FIG. 12D

Sampling

EP 0 174 095 B1

# FIG. 13

```
         ( Start )
            │
         ╱101╲
    ╱ Present ╲──── NO ──────────────┐
   ╱ Head Position Outside╲          │                        110
   ╲ Desired Read ╱                  │              ┌──────────────────┐
    ╲ Track? ╱     102               201            │ Head 11 Moved to the │
       │ YES                          │             │ Detected Tracking    │
┌──────────────┐          ┌──────────────┐          │ Position             │
│ Head 11 Moved │          │ Head 11 Moved │         └──────────────────┘
│ by (N-½)Tracks│          │ by(N-½)Tracks │              111    │
└──────────────┘          └──────────────┘                │  ╱        ╲
103     │                  202     │                      ╱ Pulse PG  ╲─ NO
     ╱     ╲                    ╱     ╲                    ╲ Detected  ╱
    ╱ Pulse PG╲─ NO            ╱ Pulse PG╲─ NO              ╲    ?   ╱
    ╲ Detected╱                ╲ Detected╱              112   │ YES
     ╲   ?  ╱                   ╲   ?  ╱                   ╱        ╲
  104   │ YES               203   │ YES                  ╱ Position of╲─ NO
     ╱       ╲                 ╱       ╲                  ╲ the Beginning of╱
    ╱ Position of╲─ NO        ╱ Position of╲─ NO          ╲ Second Block ╱
    ╲ the Beginning of╱       ╲ the Beginning of╱          ╲    ?   ╱
     ╲ Second Block ╱          ╲ Second Block ╱         113   │ YES
  105  ╲   ? ╱ YES          204  ╲   ? ╱ YES              ┌──────────┐
    ┌────────────────┐        ┌────────────────┐         │ PLL Locked│
    │ RF Detected Output│      │ RF Detected Output│      └──────────┘
    │ A/D - Converted   │      │ A/D - Converted   │           │
    └────────────────┘        └────────────────┘         ┌──────────────┐
  106   │                  205   │                        │ Digital Data Read│
     ╱     ╲                  ╱     ╲                      │ Out and Stored in│
    ╱ Sampled ╲─ NO          ╱ Sampled ╲─ NO              │ Buffer Memory    │
    ╲ Four Times╱            ╲ Four Times╱          114    └──────────────┘
     ╲   ? ╱ YES              ╲   ? ╱ YES                      │
  107   │                  206   │                         ( Stop )
    ┌────────────┐            ┌────────────┐
    │ Average Value│           │ Average Value│
    │ Stored       │           │ Stored       │
    └────────────┘            └────────────┘
        │                          │
    ┌────────────┐            ┌────────────┐
    │ Head 11 Moved by│        │ Head 11 Moved to │
    │ One Pulse Amount│        │ the Outside by One│
    └────────────┘            │ Pulse Amount     │
        │                      └────────────┘
  108   │                  207   │
     ╱     ╲                  ╱     ╲
    ╱ Maximum ╲─ NO          ╱ Maximum ╲─ NO
    ╲ Value Detected╱        ╲ Value Detected╱
     ╲   ? ╱                  ╲   ? ╱
  109   │ YES            208   │ YES
```